# EUROPEAN PATENT SPECIFICATION

(11) **EP 3 351 868 B1**
(45) Date of publication and mention of the grant of the patent: **28.08.2019**
(21) Application number: 16905687.6
(22) Date of filing: 09.12.2016
(51) Int. Cl.: F25B 1/00, F25B 41/04, F25B 49/02, F25B 13/00, F25B 25/00, F25B 41/06

(54) **HEAT PUMP DEVICE**
WÄRMEPUMPENVORRICHTUNG
DISPOSITIF DE POMPE À CHALEUR

(43) Date of publication of application: 25.07.2018
(73) Proprietor: MITSUBISHI ELECTRIC CORPORATION, Chiyoda-ku Tokyo 100-8310 (JP)
(72) Inventor: MINAMISAKO, Hirokazu, Tokyo 100-8310 (JP); SUZUKI, Yasuhiro, Tokyo 100-8310 (JP); SUZUKI, Kazutaka, Tokyo 100-8310 (JP); HATTORI, Taro, Tokyo 100-8310 (JP)
(74) Representative: Pfenning, Meinig & Partner mbB
(86) International application number: PCT/JP2016/086735
(87) International publication number: WO 2018/105102

(56) References cited:
- EP-A1- 2 963 359
- WO-A1-2013/038577
- GB-A- 1 379 549
- JP-A- H1 123 079
- JP-A- H03 221 761
- JP-A- H10 338 023
- JP-A- 2001 208 392
- JP-A- 2003 194 426
- JP-A- 2016 095 130
- JP-A- 2016 095 130

## Description

### Technical Field

The present invention relates to a heat pump apparatus, and more particularly, to leakage of refrigerant in the heat pump apparatus.

### Background Art

Hitherto, there has been known a heat pump apparatus to be used in an air-conditioning apparatus, a refrigeration apparatus, or other similar apparatus. A heat pump apparatus described in Patent Literature 1 includes a refrigerant circuit configured to circulate refrigerant and a fluid circuit configured to circulate a fluid. The refrigerant circuit includes a compressor, a heat source heat exchanger, an expansion mechanism, and an intermediate heat exchanger, which are sequentially connected through pipes to form a circuit. The fluid circuit includes the intermediate heat exchanger, a first valve, a load heat exchanger, and a second valve, which are sequentially connected through pipes to form a circuit. Further, in order to cope with leakage of the refrigerant, the heat pump apparatus described in Patent Literature 1 includes a leakage detection device configured to detect that the refrigerant circulating through the refrigerant circuit is leaked from the intermediate heat exchanger to the fluid, and a controller configured to close the first valve and the second valve connected to the fluid circuit when the leakage detection device detects the leakage of the refrigerant. In the heat pump apparatus, when the refrigerant is leaked from the refrigerant circuit to the fluid circuit, the first valve and the second valve are closed by the controller, thereby preventing the refrigerant thus leaked from flowing beyond the first valve and the second valve.

JP2003194426A relates to a cooling device comprising a plurality of evaporators of a carbon dioxide refrigerating circuit connected in parallel to a cascade condenser, the refrigerant outlet side of each evaporator connected to a refrigerant inlet of the cascade condenser through a junction pipe through which coupling pipes arranged to the respective evaporators are connected to each other, and a carbon dioxide refrigerant naturally circulated between the cascade condenser and each evaporator. The so formed cooling device is structured that a check valve to regulate a flow of the refrigerant from the junction pipe side to each coupling pipe is situated at each coupling pipe of each evaporator. Through working of the check valve, the refrigerant once flowed in the junction pipe is prevented from reverse flow toward each coupling pipe.

JP H11-23079 A is directed to a refrigerator. The problem to be solved is to provide a refrigerator to cope with a trouble, such as ozone fracture and warming of a globe by a method wherein a natural refrigerant is used in a circulation cycle on the secondary side, a booster is arranged in a position below primary and secondary heat-exchange parts, and a solenoid valve is arranged on the outlet side of a boosting device. A secondary refrigerant, being a natural refrigerant such as CO₂, radiated and condensed by a refrigerator on the primary side is fed to a heat-exchanger on the secondary side, where by absorbing heat a substance to be cooled is cooled. A secondary refrigerant evaporated by the heat-exchanger on the secondary side is returned to the refrigerator on the primary side, and is caused to drop under own weight in a liquid reservoir situated downstream from the condensing part of the refrigerator on the primary side, and stored therein. A secondary refrigerant in the liquid reservoir is supplied under own weight to a booster through a check valve. When a liquid refrigerant is sufficiently stored in a booster, solenoid valves are closed. A secondary refrigerant is heated by a heating device to increase the internal pressure of the booster, and the secondary refrigerant is fed to a heat-exchanger on the secondary through a piping on the secondary side.

GB 1 379 549 A relates to an improved throttling valve, and more particularly to a throttle valve for throttling the flow of refrigerant leaving an evaporator of a refrigerating system so that ice is prevented from being formed on the surfaces of the fins of the evaporator during high humidity and low load demand conditions.

JP 2016-095130 A discloses a heat pump apparatus according to the preamble of claim 1. The problem to be solved is to acquire a heat pump cycle device which can more surely discharge a refrigerant leaked into a water circuit to the outdoors. A heat pump cycle device includes: an outdoor unit having a refrigerant circuit which is configured by connecting a compressor for compressing a combustible refrigerant, an air heat exchanger for performing heat exchange between air and the refrigerant, a water heat exchanger for performing heat exchange between the refrigerant and water, and a throttle device for performing a pressure adjustment of the refrigerant flowing in the water heat exchanger via piping; and an indoor unit having a part of a water circuit for circulating circulation water for exchanging heat with the refrigerant and for conveying heat in the water heat exchanger. In the heat pump cycle device, outdoor unit has a pressure releasing valve for adjusting a water pressure in the water circuit on a wake flow side of the water heat exchanger in a flow direction of the water circuit.

EP 2 963 359 A1 relates to an air conditioning device. A heat source-side refrigerant circuit and a heat medium circuit are cascade-connected so that heat source-side refrigerant and a heat medium exchange heat in an intermediate heat exchanger. The heat medium circuit includes a relief valve, which is actuated when the heat source-side refrigerant flows into the heat medium circuit, to thereby expel the heat source-side refrigerant and the heat medium.

### Citation List

### Patent Literature

Patent Literature 1: International Patent WO 2013/038577 A1

### Summary of Invention

### Technical Problem

In the heat pump apparatus in Patent Literature 1, both of the leakage detection device and the controller configured to close the first valve and the second valve use electric power as a power source, and cannot be operated under a state in which the electric power is not supplied. However, even under a state in which the electric power is not supplied so that the leakage detection device and the controller are shut down, there is a risk of causing breakage of the intermediate heat exchanger due to corrosion and breakage of the intermediate heat exchanger due to freezing caused by temperature decrease. In such a case, the leakage of the refrigerant cannot be detected, and further, there is a risk in that the refrigerant thus leaked cannot be prevented from flowing beyond the first valve and the second valve. As a result, there is a risk in that the refrigerant may be leaked to an indoor space in which the load heat exchanger of the fluid circuit is arranged.

The present invention has been made to overcome the problem described above, and an object of the present invention is to provide a heat pump apparatus capable of preventing leakage of refrigerant to an indoor space even when the refrigerant is leaked under a state in which electric power is not supplied.

### Solution to Problem

According to the present invention, there is provided a heat pump apparatus according to claim 1. The heat pump apparatus includes: a refrigerant circuit in which refrigerant circulates, the refrigerant circuit being formed by connecting in order, by pipes, a compressor, a heat source heat exchanger, an expansion mechanism, and an intermediate heat exchanger; a fluid circuit in which a fluid circulates, the fluid circuit being formed by connecting in order, by pipes, the intermediate heat exchanger, a load heat exchanger, and a check valve; and a pressure regulating valve arranged in the fluid circuit and connected to a pipe connecting an outlet of the intermediate heat exchanger and an inlet of the load heat exchanger, the pressure regulating valve being configured to interrupt a flow passage of the fluid when the refrigerant leaks to the fluid and pressure of the fluid is increased.

### Advantageous Effects of Invention

In the heat pump apparatus according to the present invention, the pressure regulating valve is configured to interrupt the flow passage of the fluid when the refrigerant leaks to the fluid circulating through the fluid circuit, and the pressure of the fluid is increased. The pressure regulating valve is connected to the pipe connecting the outlet of the intermediate heat exchanger and the inlet of the load heat exchanger. Therefore, even under a state in which the electric power is not supplied to the heat pump apparatus, in the intermediate heat exchanger, the refrigerant leaking to the fluid can be prevented from reaching the load heat exchanger. As a result, the leakage of the refrigerant to the indoor space can be prevented.

### Brief Description of Drawings

Fig. 1 is a schematic diagram of configuration of an air-conditioning apparatus of Embodiment 1 of the present invention.
Fig. 2 is a schematic diagram of configuration of a pressure regulating valve of Embodiment 1.
Fig. 3 is a diagram for illustrating flows of refrigerant and water in the air-conditioning apparatus of Embodiment 1 during a heating operation.
Fig. 4 is a diagram for illustrating an operation of the pressure regulating valve of Embodiment 1 during the heating operation.
Fig. 5 is a diagram for illustrating the flows of the refrigerant and the water in the air-conditioning apparatus of Embodiment 1 during a cooling operation.
Fig. 6 is a diagram for illustrating the flows of the refrigerant and the water when the refrigerant is leaked in the air-conditioning apparatus of Embodiment 1 during the heating operation.
Fig. 7 is a diagram for illustrating an operation of the pressure regulating valve of Embodiment 1 when the refrigerant is leaked during the heating operation.
Fig. 8 is a schematic diagram of configuration of an air-conditioning apparatus of Embodiment 2 of the present invention.
Fig. 9 is a diagram for illustrating the flows of the refrigerant and the water when the refrigerant is leaked in the air-conditioning apparatus of Embodiment 2 during the heating operation.

### Description of Embodiments

Now, heat pump apparatus according to embodiments of the present invention are described in detail by referring to the drawings. Note that, the present invention is not limited to the embodiments described below. Moreover, in the drawings referred to below, sizes of components may be different from the reality in some cases.

### Embodiment 1

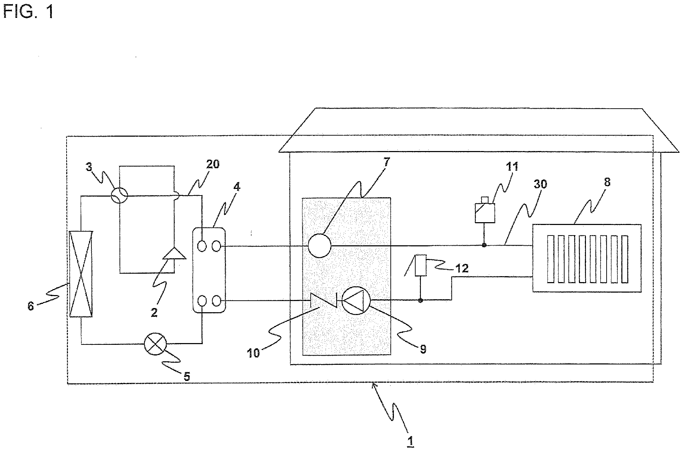

Fig. 1 is a schematic diagram of configuration of an air-conditioning apparatus of Embodiment 1 of the present invention. An air-conditioning apparatus 1 includes a refrigerant circuit 20 including a compressor 2, a four-way valve 3, a heat source heat exchanger 6, an expansion valve 5, and an intermediate heat exchanger 4, which are sequentially connected through pipes to form a circuit. Further, the air-conditioning apparatus 1 includes a water circuit 30 including the intermediate heat exchanger 4, a pressure regulating valve 7, a load heat exchanger 8, a pump 9, and a check valve 10, which are sequentially connected through pipes to form a circuit. A flammable refrigerant such as the R32 refrigerant or propane is circulated through the refrigerant circuit 20, and water is circulated through the water circuit 30. In the water circuit 30, an air purge valve 11 is connected to a pipe branching from a pipe connecting the pressure regulating valve 7 and the load heat exchanger 8, and a load safety valve 12 is connected to a pipe branching from a pipe connecting the load heat exchanger 8 and the pump 9.

The load heat exchanger 8 is installed in an indoor space being a target to be air-conditioned. In the water circuit 30, the pressure regulating valve 7 is connected to a pipe connecting an outlet of the intermediate heat exchanger 4 and an inlet of the load heat exchanger 8. The check valve 10 is a valve configured to allow water to flow from the pump 9 to the intermediate heat exchanger 4 in the water circuit 30, and to inhibit water from flowing from the intermediate heat exchanger 4 to the pump 9 in the water circuit 30.

The check valve 10 is connected in the water circuit 30 to a pipe connecting an outlet of the load heat exchanger 8 and an inlet of the intermediate heat exchanger 4. The air purge valve 11 is a valve configured to exhaust air generated in or mixed into the water circuit 30 to the outside, and to prevent idle running of the pump 9. In order to exhaust the air efficiently, the air purge valve 11 is connected to a pipe branching from a pipe located at an upper most position in the water circuit 30. The load safety valve 12 is a valve configured to drain the water to suppress pressure increase when pressure in the water circuit 30 is increased. Therefore, the load safety valve 12 is connected to a pipe, which is branched from the vicinity of an inflow side of the pump 9, so as not to be operated by an influence of pressure increase in the pump 9. That is, the air purge valve 11 and the load safety valve 12 are installed in the indoor space. In order to exchange heat between the air and the refrigerant, the heat source heat exchanger 6 is accommodated in an outdoor unit installed in an outdoor space.

### (Configuration of Pressure Regulating Valve 7)

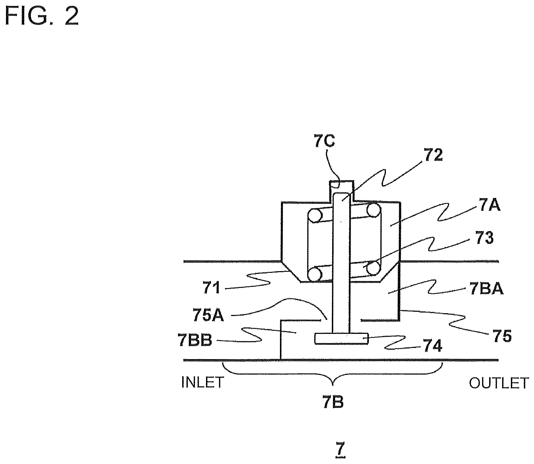

Fig. 2 is a schematic diagram of configuration of the pressure regulating valve of Embodiment 1. Referring to Fig. 2, a configuration of the pressure regulating valve 7 of Embodiment 1 is described. The pressure regulating valve 7 is a valve which is usable only in one direction, and has one inlet and one outlet. The pressure regulating valve 7 has a machine space 7A being a space that water does not flow into, and a water flow part 7B through which water flows. Further, the pressure regulating valve 7 includes a diaphragm 71, a shaft 72, a coil spring 73, a closing plate 74, and an inner wall 75.

The inner wall 75 is configured to partition an inlet-side water flow part 7BA corresponding to an inflow side of the water flow part 7B, and an outlet-side water flow part 7BB corresponding to an outflow side of the water flow part 7B. An opening portion 75A is formed in the inner wall 75. The diaphragm 71 is arranged in the inlet-side water flow part 7BA, and is configured to partition the machine space 7A and the water flow part 7B. The diaphragm 71 is a member which is deformable in an up-and-down direction in Fig. 2 in accordance with pressure. The shaft 72 is a longitudinal member inserted through the opening portion 75A of the inner wall 75 while being supported by the diaphragm 71. The shaft 72 is arranged so that one distal end thereof is located in the outlet-side water flow part 7BB and an other distal end thereof is located in the machine space 7A. The closing plate 74 is arranged on an end portion of the shaft 72, which is located in the outlet-side water flow part 7BB. An end portion of the shaft 72, which is located in the machine space 7A, is received in a receiving portion 7C formed in the machine space 7A. The closing plate 74 has an area larger than an opening area of the opening portion 75A.

In the machine space 7A, the coil spring 73 being a spring member is wound around the shaft 72. One end portion of the coil spring 73 is fixed to an inner peripheral surface of the pressure regulating valve 7, which forms the machine space 7A, and an other end portion thereof is fixed to the diaphragm 71. The coil spring 73 urges the diaphragm 71 in a downward direction. The shaft 72 is moved in an upward direction against the force of the coil spring 73. With this, the opening portion 75A of the inner wall 75 is closed by the closing plate 74, and a flow passage connecting the inlet-side water flow part 7BA and the outlet-side water flow part 7BB is interrupted. In Embodiment 1, the shaft 72 and the closing plate 74 correspond to a closing mechanism.

When the water is circulating through the water circuit 30, the water flows from an inlet of the pressure regulating valve 7 toward an outlet thereof. At this time, a force in the upward direction is applied to the diaphragm 71 due to water pressure. That is, when the water is circulating through the water circuit 30, the force of the coil spring 73 in the downward direction is applied to the diaphragm 71, and the force in the upward direction due to the water pressure is also applied to the diaphragm 71. Therefore, the diaphragm 71 is deformed in an applying direction of a force, which is greater of the force due to the water pressure and the force of the coil spring 73. In Embodiment 1, as the coil spring 73, there is selected a spring having a spring coefficient large enough to push down the shaft 72 in the downward direction against the water pressure to prevent the closing plate 74 from closing the opening portion 75A of the inner wall 75 and interrupting the flow passage of the water during a heating operation, a cooling operation, and a defrosting operation at a normal time during which the refrigerant is not leaked to the water circuit 30. Therefore, as illustrated in Fig. 2, by the force of the coil spring 73, the diaphragm 71 is deformed against the water pressure in the downward direction, that is, in a direction toward the opening portion 75A of the inner wall 75. In association with the deformation of the diaphragm 71, the shaft 72 is moved in the downward direction, and the closing plate 74 is located at a position away from the opening portion 75A.

### (Heating Operation)

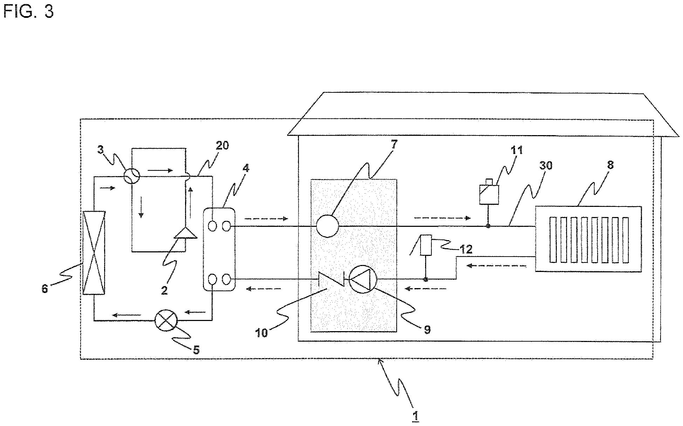

Referring to Fig. 3, an operation during the heating operation, which relates to Embodiment 1, is described. Fig. 3 is a diagram for illustrating flows of refrigerant and water in the air-conditioning apparatus of Embodiment 1 during the heating operation. In Fig. 3, solid arrows indicate the flow of the refrigerant, and broken arrows indicate the flow of the water. During the heating operation of the air-conditioning apparatus 1, in the refrigerant circuit 20, refrigerant compressed into a high-temperature, high-pressure state by the compressor 2 passes through the four-way valve 3 and flows into the intermediate heat exchanger 4. The refrigerant flowing into the intermediate heat exchanger 4 is subjected to heat exchange with water circulating through the water circuit 30, and is condensed into liquid refrigerant. At this time, the water circulating through the water circuit 30 is heated. The liquid refrigerant passes through the expansion valve 5 and is expanded into low-temperature and low-pressure two-phase gas-liquid refrigerant. The two-phase gas-liquid refrigerant flows into the heat source heat exchanger 6, and is subjected to heat exchange with outdoor air to be evaporated into gas refrigerant. The gas refrigerant passes through the four-way valve 3, and is sucked into the compressor 2 again to be compressed into a high-temperature, high-pressure state.

Meanwhile, in the water circuit 30, the high-temperature water heated in the intermediate heat exchanger 4 passes through the pressure regulating valve 7, and flows into the load heat exchanger 8. The high-temperature water flowing into the load heat exchanger 8 is subjected to heat exchange with indoor air to be cooled. At this time, the indoor air is heated. The cooled water sequentially passes through the pump 9 and the check valve 10 and flows into the intermediate heat exchanger 4 again.

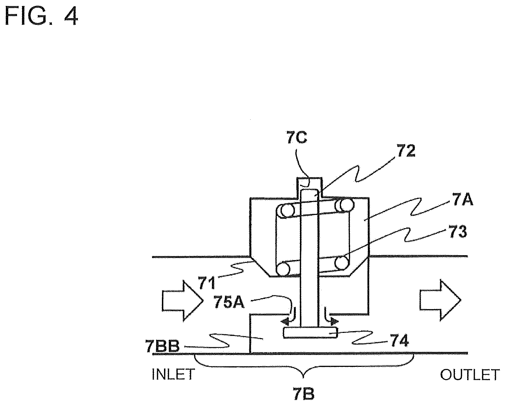

An operation of the pressure regulating valve 7 during the heating operation is described. Fig. 4 is a diagram for illustrating the operation of the pressure regulating valve of Embodiment 1 during the heating operation. As described above, the coil spring 73 of the pressure regulating valve 7 has a spring coefficient large enough to push down the shaft 72 in the downward direction against the water pressure to prevent the closing plate 74 from interrupting the flow passage of the water due to the pressure of the water passing through the pressure regulating valve 7. Therefore, during the heating operation, the coil spring 73 of the pressure regulating valve 7 pushes down the diaphragm 71, and pushes down the shaft 72 and the closing plate 74. As a result, in the pressure regulating valve 7, the flow passage is formed between the inlet-side water flow part 7BA and the outlet-side water flow part 7BB, and the high-temperature water flowing into the pressure regulating valve 7 through the inlet flows out therefrom through the outlet.

### (Cooling Operation)

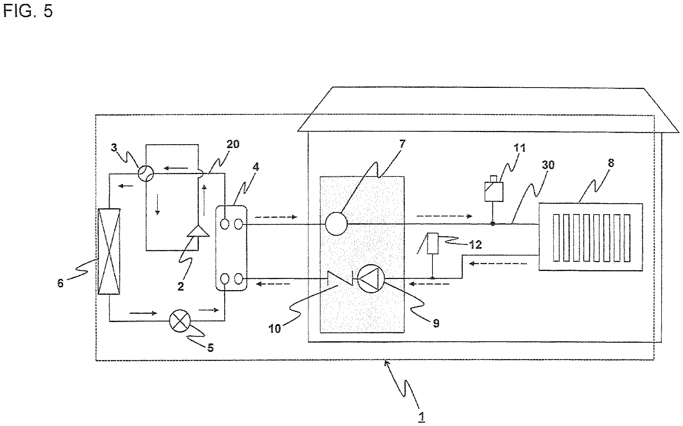

Referring to Fig. 5, an operation during the cooling operation, which relates to Embodiment 1, is described. Fig. 5 is a diagram for illustrating the flows of the refrigerant and the water in the air-conditioning apparatus of Embodiment 1 during the cooling operation. In Fig. 5, solid arrows indicate the flow of the refrigerant, and broken arrows indicate the flow of the water. During the cooling operation, in the refrigerant circuit 20, refrigerant compressed into a high-temperature, high-pressure state by the compressor 2 passes through the four-way valve 3 and flows into the heat source heat exchanger 6. The refrigerant flowing into the heat source heat exchanger 6 is subjected to heat exchange with air to be turned into liquid refrigerant. The liquid refrigerant passes through the expansion valve 5 and is expanded into low-temperature and low-pressure two-phase gas-liquid refrigerant. The two-phase gas-liquid refrigerant flows into the intermediate heat exchanger 4, and is subjected to heat exchange with water to be evaporated into gas refrigerant. At this time, the water circulating through the water circuit 30 is cooled. The gas refrigerant passes through the four-way valve 3, and is sucked into the compressor 2 again to be compressed into a high-temperature, high-pressure state.

Meanwhile, in the water circuit 30, the low-temperature water cooled in the intermediate heat exchanger 4 passes through the pressure regulating valve 7, and flows into the load heat exchanger 8. The low-temperature water flowing into the load heat exchanger 8 is subjected to heat exchange with the indoor air to be heated. At this time, the indoor air is cooled. The heated water sequentially passes through the pump 9 and the check valve 10 and flows into the intermediate heat exchanger 4 again.

An operation of the pressure regulating valve 7 during the cooling operation is described. Similarly to the case during the heating operation, as illustrated in Fig. 4, in the pressure regulating valve 7, the flow passage is formed between the machine space 7A and the water flow part 7B, and the low-temperature water flowing into the pressure regulating valve 7 through the inlet flows out therefrom through the outlet.

### (Defrosting Operation)

An operation of the air-conditioning apparatus 1 of Embodiment 1 during the defrosting operation is described. The defrosting operation is executed when frost is formed on the heat source heat exchanger 6 by the heating operation. The operation during the defrosting operation is similar to the operation during the cooling operation. That is, as illustrated in Fig. 5, in the refrigerant circuit 20, the refrigerant compressed into a high-temperature, high-pressure state by the compressor 2 passes through the four-way valve 3, and flows into the heat source heat exchanger 6. The frost formed on the heat source heat exchanger 6 is melted and removed by the high-temperature and high-pressure refrigerant flowing into the heat source heat exchanger 6. The other operation is similar to the operation during the cooling operation.

### (When Refrigerant is Leaked)

As described above, during the cooling operation and the defrosting operation, the low-temperature refrigerant flows into the intermediate heat exchanger 4, and cools the water flowing through the intermediate heat exchanger 4. Therefore, depending on circumstances, the water flowing through the intermediate heat exchanger 4 may be frozen, and there is a risk in that the intermediate heat exchanger 4 may be broken due to cubical expansion of the water caused by the freezing. Further, there is a risk in that fatigue fracture caused by the pressure increase may occur in the intermediate heat exchanger 4 due to the breakage caused by abnormal increase of pressure of the refrigerant or as a result of repetitive operations. Further, thinning of the intermediate heat exchanger 4 caused by corrosion of components of the intermediate heat exchanger 4 may lead to decrease in strength of the intermediate heat exchanger 4, and there is also a risk in that the breakage of the intermediate heat exchanger 4 may be promoted.

When the intermediate heat exchanger 4 is broken, due to a difference in pressure between the refrigerant flowing through the refrigerant circuit 20 and the water flowing through the water circuit 30, the refrigerant is mixed into the water circuit 30. When the refrigerant is mixed into the water circuit 30, the refrigerant is gasified due to an effect of pressure reduction, thereby causing increase of the pressure in the water circuit 30. When the pressure in the water circuit 30 is increased, the water is drained through the load safety valve 12 mounted in the water circuit 30. At this time, through the drainage of water, the refrigerant mixed into the water inside the water circuit 30 is exhausted to the indoor space. As a result, a flammable region is formed, and when the flammable region reaches an ignition source, there is a risk of causing ignition. Similarly, the gasified refrigerant mixed into the water circuit 30 is exhausted through the air purge valve 11 and forms the flammable region, with the result that there is a risk of causing ignition. However, in Embodiment 1, the pressure regulating valve 7 is provided. Thus, the refrigerant is prevented from being exhausted to the indoor space and forming the flammable region.

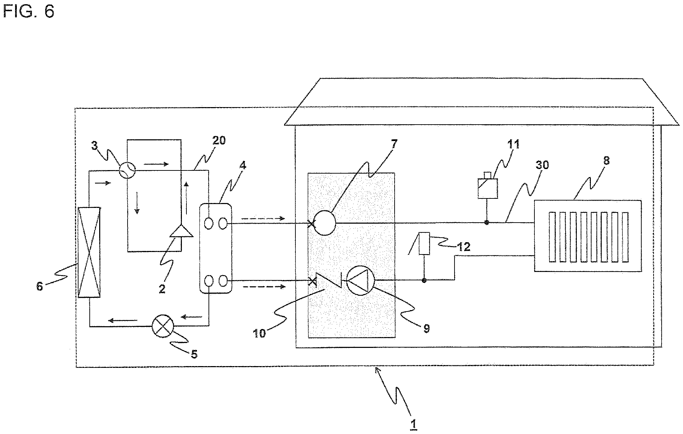

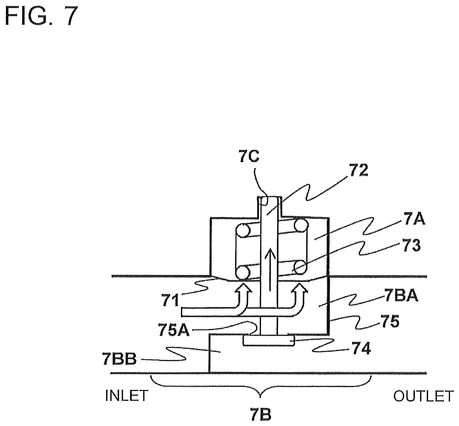

Now, an operation of the pressure regulating valve 7 of Embodiment 1 when the refrigerant is leaked is described. Fig. 6 is a diagram for illustrating the flows of the refrigerant and the water when the refrigerant is leaked in the air-conditioning apparatus of Embodiment 1 during the heating operation. Fig. 7 is a diagram for illustrating an operation of the pressure regulating valve of Embodiment 1 when the refrigerant is leaked during the heating operation. When the refrigerant is leaked, the refrigerant leaks to the water circulating through the water circuit 30. With this, the water pressure of the water flowing into the pressure regulating valve 7 through the inlet thereof is increased to be greater than the force of the coil spring 73 of the pressure regulating valve 7. As a result, the diaphragm 71 is deformed upward, that is, in a direction to be away from the opening portion 75A of the inner wall 75 against the force of the coil spring 73. The shaft 72 is moved in association with the deformation of the diaphragm 71. With this, as illustrated in Fig. 7, the closing plate 74 is located at a position at which the closing plate 74 closes the opening portion 75A. When the opening portion 75A of the inner wall 75 is closed by the closing plate 74, in the pressure regulating valve 7, the flow passage from the inlet-side water flow part 7BA to the outlet-side water flow part 7BB is interrupted, thereby preventing the water, which flows into the pressure regulating valve 7 through the inlet thereof, from flowing out of the pressure regulating valve 7 through the outlet thereof. Further, the flow passage is interrupted so that the water pressure applied to the inlet of the pressure regulating valve 7 is further increased, thereby also increasing the pressure of pressing the closing plate 74 against a peripheral edge of the opening portion 75A of the inner wall 75 by the diaphragm 71 and the shaft 72. As a result, an amount of the refrigerant leaking to the water circulating through the water circuit 30 is reduced.

As described above, in Embodiment 1, the pressure regulating valve 7 is configured to be operated when the water pressure is increased due to the leakage of the refrigerant to the water circulating through the water circuit 30. Therefore, even under a state in which electric power is not supplied to the air-conditioning apparatus 1, when a situation of leakage of the refrigerant occurs, the flow passage in the water circuit 30 is interrupted by the pressure regulating valve 7, thereby preventing the leakage of the refrigerant to the indoor space.

Further, in the air-conditioning apparatus described in Patent Literature 1, a time period is required from detection by a leakage detection device to interruption by a first valve and a second valve. Therefore, there is a risk in that the refrigerant thus leaked may flow further beyond the first valve and the second valve. As a result, there is a risk in that the refrigerant may be leaked to the indoor space in which a load heat exchanger of a fluid circuit is arranged. On the other hand, according to Embodiment 1, the pressure regulating valve 7 is operated in response to the increase in water pressure caused by the leakage of the refrigerant. Thus, the flow passage can be interrupted in a short period of time. Therefore, the amount of the refrigerant leaking to the water circuit 30 can be reduced.

The pressure regulating valve 7 is interposed at the pipe connecting the outlet of the intermediate heat exchanger 4 and the inlet of the load heat exchanger 8 at a portion between the outlet of the intermediate heat exchanger 4 and the air purge valve 11. Therefore, the refrigerant leaking to the water inside the water circuit 30 is prevented from reaching the air purge valve 11. As a result, the leakage of the refrigerant to the indoor space is prevented.

Further, through interruption of the flow passage of the water in the pressure regulating valve 7, the flow of the water in the water circuit 30 is stopped, and the check valve 10 is set to a closed state. As a result, the refrigerant leaked from the intermediate heat exchanger 4 and flowing into the water circuit 30 is prevented from flowing from the pressure regulating valve 7 and the check valve 10 to a side on which the load heat exchanger 8 is located, thereby preventing the refrigerant from reaching the air purge valve 11 and preventing the refrigerant from reaching the load safety valve 12. Therefore, the leakage of the refrigerant to the indoor space can be prevented. Further, the pressure increase of the water flowing through the load heat exchanger 8, pipes extending throughout the indoor space, and welding portions of the pipes can be prevented. Therefore, the water including the refrigerant can be prevented from leaking exceeding the pressure resistance of the load heat exchanger 8, the pipes in the indoor space, and the welding portions of the pipes.

### Embodiment 2

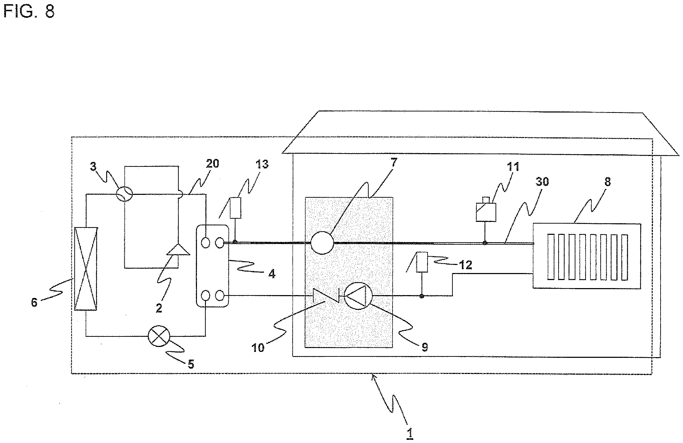

Fig. 8 is a schematic diagram of configuration of an air-conditioning apparatus of Embodiment 2 of the present invention. Embodiment 2 is different from Embodiment 1 in that an outdoor-space safety valve 13 is connected to a pipe branching from a pipe connecting the intermediate heat exchanger 4 and the pressure regulating valve 7. Operating pressure, that is, valve opening pressure of the outdoor-space safety valve 13 is equal to or higher than operating pressure of the closing plate 74 of the pressure regulating valve 7, that is, fluid interruption pressure of the pressure regulating valve 7. In other words, the fluid interruption pressure of the pressure regulating valve 7 is equal to or lower than the operating pressure of the outdoor-space safety valve 13. It is desired that the valve opening pressure of the outdoor-space safety valve 13 be higher than the operating pressure of the closing plate 74. Further, it is desired that the outdoor-space safety valve 13 and a drain outlet extending from the outdoor-space safety valve 13 be installed in an open space such as an open-air space or a room having a large floor area.

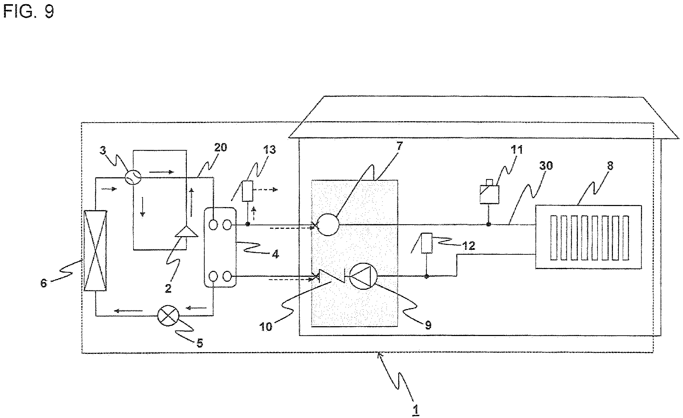

In Embodiment 2, a heating operation, a cooling operation, and a defrosting operation are executed in a manner similar to those in Embodiment 1 described above, and hence description thereof is omitted. An operation of the air-conditioning apparatus 1 of Embodiment 2 when the refrigerant is leaked from the intermediate heat exchanger 4 to the water circuit 30 is described. Fig. 9 is a diagram for illustrating the flows of the refrigerant and the water when the refrigerant is leaked in the air-conditioning apparatus of Embodiment 2 during the heating operation. In Fig. 9, solid arrows indicate the flow of the refrigerant, and broken arrows indicate the flow of the water. When the refrigerant is leaked from the intermediate heat exchanger 4 to the water circuit 30, and the pressure of the water circulating through the water circuit 30 is increased, the pressure regulating valve 7 is operated to interrupt the flow passage of the water. Such an operation is similar to the operation in Embodiment 1 described above. In Embodiment 2, after the leakage of the refrigerant, when the pressure increase of the water inside the water circuit 30 is continued so that the pressure of the water inside the water circuit 30 exceeds the operating pressure of the outdoor-space safety valve 13, the outdoor-space safety valve 13 releases the water and the refrigerant to the open space. Then, the pressure in the water circuit 30 is gradually reduced. Through the reduction of the pressure in the water circuit 30, the outdoor-space safety valve 13 is closed, and the release of the water and the refrigerant to the open space is stopped.

According to Embodiment 2, the outdoor-space safety valve 13 is provided on the pipe branching from the pipe connecting the intermediate heat exchanger 4 and the pressure regulating valve 7. Therefore, it is possible to prevent the refrigerant flowing into the water circuit 30 through the broken part of the intermediate heat exchanger 4 from reaching the indoor space, and to prevent the increase of the pressure applied to the pipe connecting the check valve 10 and the intermediate heat exchanger 4 and the pipe connecting the intermediate heat exchanger 4 and the pressure regulating valve 7. Further, when the refrigerant is leaked, the increase of the pressure applied to those pipes is prevented. Thus, components having low resistance to back pressure can be used for the pressure regulating valve 7, the check valve 10, and the pipe connecting each of the pressure regulating valve 7 and the check valve 10 to the intermediate heat exchanger 4. That is, components having special specification do not need to be prepared for the pressure regulating valve 7, the check valve 10, and the pipe connecting each of the pressure regulating valve 7 and the check valve 10 to the heat exchanger 4. Thus, this configuration is economical.

### Reference Signs List

1 air-conditioning apparatus 2 compressor 3 four-way valve 4 intermediate heat exchanger 5 expansion valve 6 heat source heat exchanger 7 pressure regulating valve 7A machine space 7B water flow part 7BA inlet-side water flow part 7BB outlet-side water flow part 7C receiving portion 8 load heat exchanger 9 pump 10 check valve 11 air purge valve 12 load safety valve 13 outdoor-space safety valve 20 refrigerant circuit 30 water circuit 71 diaphragm 72 shaft 73 coil spring 74 closing plate 75 inner wall 75A opening portion

## Claims

1. A heat pump apparatus (1) comprising:
a refrigerant circuit (20) in which refrigerant circulates, the refrigerant circuit (20) being formed by connecting in order, by pipes, a compressor (2), a heat source heat exchanger (6), an expansion mechanism (5), and an intermediate heat exchanger (4);
a fluid circuit (30) in which a fluid circulates, the fluid circuit (30) being formed by connecting in order, by pipes, the intermediate heat exchanger (4), a load heat exchanger (8), and a check valve (10); and
a pressure regulating valve (7) arranged in the fluid circuit (30) and connected to a pipe connecting an outlet of the intermediate heat exchanger (4) and an inlet of the load heat exchanger (8),
wherein the pressure regulating valve (7) is configured to operate to interrupt a flow passage of the fluid in response to an increase in pressure of the fluid caused by a leakage of the refrigerant to the fluid circulating through the fluid circuit,
**characterized in that**
the pressure regulating valve (7) includes
a flow part (7B) through which the fluid flows, and
a space (7A) that the fluid is prevented from flowing into,
an inner wall (75) configured to partition an inflow side (7BA) of the flow part (7B) and an outflow side (7BB) of the flow part (7B),
a diaphragm (71) arranged on the inflow side (7BA) and configured to partition the space (7A) and the flow passage, and to be deformed in accordance with the pressure,
a closing mechanism (72, 74) configured to be moved in association with the deformation of the diaphragm (71) to open and close an opening portion (75A) formed in the inner wall (75); and
a spring (73) configured to deform the diaphragm (71) by applying a force to the diaphragm (71) to move the closing mechanism (72, 74) to a position at which the closing mechanism (72, 74) is prevented from closing the opening portion (75A),
wherein the spring (73) is configured to have a force set such that, under a state in which the refrigerant is not leaking, the diaphragm (71) is deformed against the pressure of the fluid by the force, to prevent the opening portion (75A) from being closed by the closing mechanism (72, 74), and that, under a state in which the refrigerant is leaking, the diaphragm (71) is deformed against the force, by the pressure of the fluid increased due to leakage of the refrigerant so that the opening portion (75A) is closed by the closing mechanism (72, 74),
wherein the closing mechanism (72, 74) includes
a shaft (72) being a longitudinal member, inserted through the opening portion (75A) while being supported by the diaphragm (71), and arranged so that one distal end of the shaft (72) is located on the outflow side (7BB) and an other distal end of the shaft (72) is located in the space (7A); and
a closing plate (74) arranged on the one distal end of the shaft (72),
wherein the spring (73) is wound around the shaft (72) in the space (7A),
wherein, under the state in which the refrigerant is not leaking, the diaphragm (71) is deformed in a direction toward the opening portion (75A) by the force of the spring (73) against the pressure of the fluid, and the shaft (72) is moved in association with the deformation of the diaphragm (71) so that the closing plate (74) is located at a position away from the opening portion (75A), and
wherein, under the state in which the refrigerant is leaking, the diaphragm (71) is deformed in a direction to be away from the opening portion (75A) by the pressure of the fluid increased due to the leakage of the refrigerant against the force of the spring (73), and the shaft (72) is moved in association with the deformation of the diaphragm (71) so that the closing plate (74) is located at a position at which the closing plate (74) closes the opening portion (75A).

2. The heat pump apparatus (1) of claim 1, further comprising an air purge valve (11) configured to exhaust air inside the fluid circuit (30) to an outside of the fluid circuit (30), and connected to a pipe branching from the pipe connecting the outlet of the intermediate heat exchanger (4) and the inlet of the load heat exchanger (8),
wherein the pressure regulating valve (7) is interposed between the outlet of the intermediate heat exchanger (4) and the air purge valve (11).

3. The heat pump apparatus (1) of claim 1 or 2, further comprising a safety valve (13) configured to be opened when the pressure in the fluid circuit (30) is increased, and to exhaust the fluid to the outside of the fluid circuit (30) to prevent the increase of the pressure in the fluid circuit (30),
wherein the safety valve (13) is connected to a pipe branching from a portion between the check valve (10) and the pressure regulating valve (7) in a circulating direction of the fluid which flows from the check valve (10) into an inlet of the intermediate heat exchanger (4) and reaches the pressure regulating valve (7) through the outlet of the intermediate heat exchanger (4), and
wherein the safety valve (13) is configured to, when the refrigerant leaks to the fluid and the pressure in the fluid circuit (30) is increased, exhaust the fluid including the refrigerant through the safety valve (13).

4. The heat pump apparatus (1) of claim 3, wherein fluid interruption pressure of the pressure regulating valve (7) is set equal to or lower than operating pressure of the safety valve (13).

5. The heat pump apparatus (1) of any one of claims 1 to 4, wherein the refrigerant circulating through the refrigerant circuit (20) is flammable, and the fluid circulating through the fluid circuit (30) is non-flammable.

## Patentansprüche

1. Wärmepumpenvorrichtung (1), umfassend:
einen Kältemittelkreislauf (20), in dem ein Kältemittel zirkuliert, wobei der Kältemittelkreislauf (20) gebildet ist durch Verbinden, in Reihenfolge, durch Leitungen, eines Verdichters (2), eines Wärmequellenwärmetauschers (6), eines Expansionsmechanismus (5) und eines Zwischenwärmetauschers (4);
einen Fluidkreislauf (30), in dem ein Fluid zirkuliert, wobei der Fluidkreislauf (30) gebildet ist durch Verbinden in Reihenfolge, durch Leitungen, des Zwischenwärmetauschers (4), eines Lastwärmetauschers (8) und eines Rückschlagventils (10); und
ein Druckregelventil (7), das im Fluidkreislauf (30) angeordnet ist und mit einer Leitung verbunden ist, die einen Auslass des Zwischenwärmetauschers (4) und einen Einlass des Lastwärmetauschers (8) verbindet,
wobei das Druckregelventil (7) eingerichtet ist, zu arbeiten, um einen Strömungsdurchlass des Fluids in Antwort auf einen Druckanstieg des Fluids, der durch ein Austreten des Kältemittels in das durch den Fluidkreislauf zirkulierende Fluid verursacht wird, zu unterbrechen,
**dadurch gekennzeichnet, dass**
das Druckregelventil (7) aufweist:
ein Strömungsteil (7B), durch das das Fluid strömt, und
einen Raum (7A), in den das Fluid nicht einströmen kann,
eine Innenwand (75), die eingerichtet ist, eine Einströmseite (7BA) des Strömungsteils (7B) und eine Ausströmseite (7BB) des Strömungsteils (7B) zu trennen,
eine Membran (71), die auf der Einströmseite (7BA) angeordnet ist und eingerichtet ist, den Raum (7A) und den Strömungsdurchlass zu trennen und dem Druck entsprechend verformt zu werden,
einen Schließmechanismus (72, 74), der eingerichtet ist, zusammen mit der Verformung der Membran (71) bewegt zu werden, um einen in der Innenwand (75) ausgebildeten Öffnungsabschnitt (75A) zu öffnen und zu schließen; und
eine Feder (73), die eingerichtet ist, die Membran (71) durch Aufbringen einer Kraft auf die Membran (71) zu verformen, um den Schließmechanismus (72, 74) in eine Position zu bewegen, in der verhindert wird, dass der Schließmechanismus (72, 74) den Öffnungsabschnitt (75A) schließt,
wobei die Feder (73) eingerichtet ist, eine solche eingestellte Kraft aufzuweisen, so dass, in einem Zustand, in dem das Kältemittel nicht austritt, die Membran (71) durch die Kraft gegen den Druck des Fluids verformt wird, um zu verhindern, dass der Öffnungsabschnitt (75A) durch den Schließmechanismus (72, 74) geschlossen wird, und dass, in einem Zustand, in dem das Kältemittel austritt, die Membran (71) gegen die Kraft verformt wird, durch den aufgrund des Austretens des Kältemittels erhöhten Drucks des Fluids, so dass der Öffnungsabschnitt (75A) durch den Schließmechanismus (72, 74) geschlossen wird,
wobei der Schließmechanismus (72, 74) aufweist:
eine Welle (72), die ein Längselement ist, die durch den Öffnungsabschnitt (75A) eingeführt wird, während diese durch die Membran (71) gestützt wird, und so angeordnet ist, dass ein distales Ende der Welle (72) auf der Ausströmseite (7BB) angeordnet ist und ein anderes distales Ende der Welle (72) in dem Raum (7A) angeordnet ist; und
eine Schließplatte (74), die an dem einen distalen Ende der Welle (72) angeordnet ist, wobei die Feder (73) um die Welle (72) im Raum (7A) gewunden ist, wobei in dem Zustand, in dem das Kältemittel nicht austritt, die Membran (71) in einer Richtung zum Öffnungsabschnitt (75A) durch die Kraft der Feder (73) gegen den Druck des Fluids verformt wird, und die Welle (72) zusammen mit der Verformung der Membran (71) bewegt wird, so dass sich die Schließplatte (74) an einer Position entfernt von dem Öffnungsabschnitt (75A) befindet, und
wobei in dem Zustand, in dem das Kältemittel austritt, die Membran (71) in einer Richtung entfernt vom Öffnungsabschnitt (75A) durch den aufgrund des Austreten des Kältemittels erhöhten Druck des Fluids gegen die Kraft der Feder (73) verformt wird, und die Welle (72) zusammen mit der Verformung der Membran (71) bewegt wird, so dass die Schließplatte (74) sich an einer Position befindet, an der die Schließplatte (74) den Öffnungsabschnitt (75A) schließt.

2. Wärmepumpenvorrichtung (1) nach Anspruch 1, ferner umfassend ein Entlüftungsventil (11), das eingerichtet ist, Luft innerhalb des Fluidkreislaufs (30) zu einer Außenseite des Fluidkreislaufs (30) abzuführen, und mit einer Leitung, abzweigend von der den Auslass des Zwischenwärmetauschers (4) und den Einlass des Lastwärmetauschers (8) verbindenden Leitung, verbunden ist,
wobei das Druckregelventil (7) zwischen dem Auslass des Zwischenwärmetauschers (4) und dem Entlüftungsventil (11) angeordnet ist.

3. Wärmepumpenvorrichtung (1) nach Anspruch 1 oder 2, ferner umfassend ein Sicherheitsventil (13), das eingerichtet ist, geöffnet zu werden, wenn der Druck im Fluidkreislauf (30) erhöht wird, und das Fluid zur Außenseite des Fluidkreislaufs (30) abzuführen, um den Druckanstieg im Fluidkreislauf (30) zu verhindern,
wobei das Sicherheitsventil (13) mit einer Leitung, abzweigend von einem Abschnitt zwischen dem Rückschlagventil (10) und dem Druckregelventil (7), verbunden ist in einer Zirkulationsrichtung des Fluids, das vom Rückschlagventil (10) in einen Einlass des Zwischenwärmetauschers (4) strömt und das Druckregelventil (7) durch den Auslass des Zwischenwärmetauschers (4) erreicht, und
wobei das Sicherheitsventil (13) eingerichtet ist, um, wenn das Kältemittel in das Fluid austritt und der Druck im Fluidkreislauf (30) erhöht wird, das Kältemittel enthaltende Fluid durch das Sicherheitsventil (13) abzuführen.

4. Wärmepumpenvorrichtung (1) nach Anspruch 3, wobei der Fluidunterbrechungsdruck des Druckregelventils (7) gleich oder niedriger eingestellt ist als der Betriebsdruck des Sicherheitsventils (13).

5. Wärmepumpenvorrichtung (1) nach einem der Ansprüche 1 bis 4, wobei das durch den Kältemittelkreislauf (20) zirkulierende Kältemittel entzündlich ist, und das durch den Fluidkreislauf (30) zirkulierende Fluid nicht entzündlich ist.

## Revendications

1. Appareil de pompe à chaleur (1) comprenant :
un circuit de fluide frigorigène (20) dans lequel un fluide frigorigène circule, le circuit de fluide frigorigène (20) étant formé en reliant dans l'ordre, par des tuyaux, un compresseur (2), un échangeur de chaleur de source de chaleur (6), un mécanisme de détente (5), et un échangeur de chaleur intermédiaire (4) ;
un circuit de fluide (30) dans lequel un fluide circule, le circuit de fluide (30) étant formé en reliant dans l'ordre, par des tuyaux, l'échangeur de chaleur intermédiaire (4), un échangeur de chaleur de charge (8), et un clapet anti-retour (10) ; et
une vanne de régulation de pression (7) agencée dans le circuit de fluide (30) et reliée à un tuyau reliant une sortie de l'échangeur de chaleur intermédiaire (4) et une entrée de l'échangeur de chaleur de charge (8),
dans lequel la vanne de régulation de pression (7) est configurée pour fonctionner pour interrompre un passage d'écoulement du fluide en réponse à une augmentation de pression du fluide provoquée par une fuite du fluide frigorigène vers le fluide circulant à travers le circuit de fluide,
**caractérisé en ce que**
la vanne de régulation de pression (7) comprend :
une partie d'écoulement (7B) à travers laquelle le fluide s'écoule, et
un espace (7A) dans lequel le fluide ne peut pas s'écouler,
une paroi interne (75) configurée pour séparer un côté d'écoulement d'entrée (7BA) de la partie d'écoulement (7B) et un côté d'écoulement de sortie (7BB) de la partie d'écoulement (7B),
une membrane (71) agencée du côté d'écoulement d'entrée (7BA) et configurée pour séparer l'espace (7A) et le passage d'écoulement, et pour être déformée conformément à la pression,
un mécanisme de fermeture (72, 74) configuré pour être déplacé en association avec la déformation de la membrane (71) pour ouvrir et fermer une partie d'ouverture (75A) formée dans la paroi interne (75) ; et
un ressort (73) configuré pour déformer la membrane (71) en appliquant une force à la membrane (71) pour déplacer le mécanisme de fermeture (72, 74) vers une position à laquelle le mécanisme de fermeture (72, 74) ne peut pas fermer la partie d'ouverture (75A),
dans lequel le ressort (73) est configuré pour avoir une force établie de sorte que, dans un état dans lequel le fluide frigorigène ne fuit pas, la membrane (71) soit déformée contre la pression du fluide par la force, pour empêcher la fermeture de la partie d'ouverture (75A) par le mécanisme de fermeture (72, 74), et de sorte que, dans un état dans lequel le fluide frigorigène fuit, la membrane (71) soit déformée contre la force, par l'augmentation de la pression du fluide due à la fuite du fluide frigorigène de sorte que la partie d'ouverture (75A) soit fermée par le mécanisme de fermeture (72, 74),
dans lequel le mécanisme de fermeture (72, 74) comprend :
un arbre (72) qui est un élément longitudinal, inséré à travers la partie d'ouverture (75A) tout en étant supporté par la membrane (71), et agencé de sorte qu'une extrémité distale de l'arbre (72) soit située du côté d'écoulement de sortie (7BB) et qu'une autre extrémité distale de l'arbre (72) soit située dans l'espace (7A) ; et
une plaque de fermeture (74) agencée sur ladite une extrémité distale de l'arbre (72),
dans lequel le ressort (73) est enroulé autour de l'arbre (72) dans l'espace (7A),
dans lequel, dans l'état dans lequel le fluide frigorigène ne fuit pas, la membrane (71) est déformée dans une direction vers la partie d'ouverture (75A) par la force du ressort (73) contre la pression du fluide, et l'arbre (72) est déplacé en association avec la déformation de la membrane (71) de sorte que la plaque de fermeture (74) est située à une position éloignée de la partie d'ouverture (75A), et
dans lequel, dans l'état dans lequel le fluide frigorigène fuit, la membrane (71) est déformée dans une direction pour être éloignée de la partie d'ouverture (75A) par l'augmentation de la pression du fluide due à la fuite du fluide frigorigène contre la force du ressort (73), et l'arbre (72) est déplacé en association avec la déformation de la membrane (71) de sorte que la plaque de fermeture (74) est située à une position à laquelle la plaque de fermeture (74) ferme la partie d'ouverture (75A).

2. Appareil de pompe à chaleur (1) selon la revendication 1, comprenant en outre une vanne de purge d'air (11) configurée pour évacuer l'air présent à l'intérieur du circuit de fluide (30) à l'extérieur du circuit de fluide (30), et reliée à un tuyau provenant du tuyau reliant la sortie de l'échangeur de chaleur intermédiaire (4) et l'entrée de l'échangeur de chaleur de charge (8),
dans lequel la vanne de régulation de pression (7) est interposée entre la sortie de l'échangeur de chaleur intermédiaire (4) et la vanne de purge d'air (11).

3. Appareil de pompe à chaleur (1) selon la revendication 1 ou 2, comprenant en outre une vanne de sécurité (13) configurée pour être ouverte lorsque la pression dans le circuit de fluide (30) est augmentée, et pour évacuer le fluide à l'extérieur du circuit de fluide (30) pour empêcher l'augmentation de la pression dans le circuit de fluide (30),
dans lequel la vanne de sécurité (13) est reliée à un tuyau provenant d'une partie entre le clapet anti-retour (10) et la vanne de régulation de pression (7) dans une direction de circulation du fluide qui s'écoule du clapet anti-retour (10) dans une entrée de l'échangeur de chaleur intermédiaire (4) et atteint la vanne de régulation de pression (7) à travers la sortie de l'échangeur de chaleur intermédiaire (4), et
dans lequel la vanne de sécurité (13) est configurée pour, lorsque le fluide frigorigène fuit vers le fluide et que la pression dans le circuit de fluide (30) est augmentée, évacuer le fluide comprenant le fluide frigorigène à travers la vanne de sécurité (13).

4. Appareil de pompe à chaleur (1) selon la revendication 3, dans lequel la pression d'interruption de fluide de la vanne de régulation de pression (7) est établie à une valeur inférieure ou égale à la pression de fonctionnement de la vanne de sécurité (13).

5. Appareil de pompe à chaleur (1) selon l'une quelconque des revendications 1 à 4, dans lequel le fluide frigorigène circulant à travers le circuit de fluide frigorigène (20) est inflammable, et le fluide circulant à travers le circuit de fluide (30) n'est pas inflammable.
